# EUROPEAN PATENT SPECIFICATION

(11) **EP 3 252 847 B1**
(45) Date of publication and mention of the grant of the patent: **07.11.2018**
(21) Application number: 17164709.2
(22) Date of filing: 04.04.2017
(51) Int. Cl.: H01M 2/10, H01M 2/30, H01M 10/42, H01M 2/20, H01M 10/613, H01M 10/6554

(54) **BATTERY PACK**
BATTERIEPACK
BLOC-BATTERIES

(30) Priority: 01.06.2016 KR 20160068142
(43) Date of publication of application: 06.12.2017
(73) Proprietor: LG Electronics Inc., Seoul 07336 (KR)
(72) Inventor: SON, Ingook, 06772 Seoul (KR); CHO, Sijung, 06772 Seoul (KR)
(74) Representative: Katérle, Axel

(56) References cited:
- EP-A2- 2 693 531
- EP-B1- 2 315 297
- KR-A- 20160 026 028

## Description

### BACKGROUND

The present invention relates to a battery pack and, more particularly, to a battery pack in which a cell lead of a battery cell is bonded to a bus bar.

A battery pack is obtained by assembling a plurality of battery cells for supplying a voltage into one apparatus and is used in various industrial fields such as mobile terminals, home appliances and vehicles.

In particular, the battery pack may be mounted and used in an electric vehicle traveling using driving force output from a driving motor. Such a battery pack may be configured by coupling a plurality of battery modules and each of the plurality of battery modules may include at least one battery cell.

Each battery cell may include cell leads.

The battery pack may further include a bus bar for connecting the cell leads. The battery pack may include a plurality of battery cells connected by the bus bar in series or in parallel.

The battery pack may further include a protection circuit assembly connected to the bus bar and the protection circuit assembly may include at least one circuit unit for protecting the battery pack.

As for prior art, reference is made to the following documents:
KR 10-2015-0132903 A (published on November 27, 2015); KR 10-2009-0108418 A (published on December 14, 2009); KR 10-2016 0026028 A; EP 2 315 297 B1; and EP 2 693 531 A2.

### SUMMARY

An object of the present invention is to provide a battery pack capable of minimizing damage to a part mounted on a printed circuit board by ultrasonic waves or vibration or minimizing a failure rate.

According an aspect of the present invention, a battery pack includes a battery cell including a cell lead, a bus bar bonded to the cell to lead and having a terminal pin formed, a connection board which the bus bar is mounted thereon, a printed circuit board having a terminal clip mounted thereon, the terminal pin being arranged to selectively connect to and
disconnect from the terminal clip, a housing having a printed circuit board accommodation space for accommodating the printed circuit board, and a locking part for locking the housing relative to
the connection board at a first position where the terminal pin does not elastically deform the terminal clip and locking the housing relative to the connection board at a second position where the terminal pin elastically deforms the terminal clip.

The locking part may include a protrusion formed on any one of the housing and the connection board, a first engaging projection formed on the other of the housing and the connection board and designed to lock the protrusion in a first stage, and a second engaging projection formed on the other of the housing and the connection board to be spaced apart from the first engaging projection and designed to lock the protrusion in a second stage.

A gap, into which the protrusion extends, may be formed between the first engaging projection and the second engaging projection.

A Housing accommodation wall for accommodating the housing may be formed on the connection board, and a size of the housing accommodation wall may be greater than that of the housing.

The protrusion may protrude from an outer surface of the housing, and the first engaging projection and the second engaging projection may protrude from an inner surface of the housing accommodation wall.

A pair of slits may be formed in the housing by the side of an area facing the terminal clip, and a lever may be formed between the pair of slits.

The protrusion may be formed on the lever.

A gap may be formed between the lever and an inner surface of the housing accommodation wall.

The terminal clip may include an outer clip and a pair of contacts extending from the outer clip to the inside of the outer clip and arranged to become elastically deformed by the terminal pin.

One end of the pair of contacts may be connected to the outer clip and the other end thereof is a free end.

The terminal pin may be arranged to enter between the pair of contacts to elastically deform the pair of contacts away from each other.

The locking part may be designed to lock the housing relative to the connection board in a first stage at a first position where the terminal pin does not elastically deform the pair of contacts, and lock the housing relative to the connection board in a second stage at a second position where the terminal pin elastically deforms the pair of contacts.

The pair of contacts may face each other in a direction orthogonal to a contact direction of the cell lead and the bus bar.

A support wall supporting the terminal clip may be formed in the housing.

An opening, through which the inside of the terminal clip is visible, may be formed in an area of the terminal clip, which faces the printed circuit board.

According to another aspect of the present invention, a battery pack includes a battery cell including a cell lead, a bus bar bonded to the cell lead and having a terminal pin formed therein, a connection board having the bus bar mounted thereon, a printed circuit board having a terminal clip mounted thereon, the terminal pin being arranged to selectively connect to and disconnect from the terminal clip, a housing having a printed circuit board accommodation space for accommodating the printed circuit board, and a locking part for locking the housing relative to the connection board. A Housing accommodation wall for accommodating the housing is formed on the connection board, the locking part includes a protrusion formed on any one of the housing and the housing accommodation wall, a first engaging projection formed on the other of the housing and the housing accommodation wall, and a second engaging projection formed on the other of the housing and the housing accommodation wall to be spaced apart from the first engaging projection, and the protrusion is locked by the first engaging projection and the second engaging projection at a position where the terminal pin does not elastically deform the terminal clip, and is locked by the second engaging projection at a position where the terminal pin elastically deforms the terminal clip.

A pair of slits may be formed in the housing by the side of an area facing the terminal clip, a lever may be formed between the pair of slits, the protrusion may be formed on the lever, and the first engaging projection and the second engaging projection may protrude from an inner surface of the housing accommodation wall.

A gap may be formed between the lever and an inner surface of the housing accommodation wall.

The terminal clip may include an outer clip and a pair of contacts extending from the outer clip to the inside of the outer clip and elastically deformed by the terminal pin, and the pair of contacts may face each other in a direction orthogonal to a contact direction of the cell lead and the bus bar.

An opening, through which the inside of the terminal clip is viewed, may be formed in an area, which faces the printed circuit board, of the outer clip.

According to the embodiments of the present invention, it is possible to prevent parts mounted on the printed circuit board from being damaged by ultrasonic waves or vibrations generated upon bonding the cell lead and the bus bar.

In addition, since the protrusion is formed on a deformable lever, a manufacturer or a service provider may detach the housing from the housing accommodation wall with less power.

In addition, the service provider may easily grip the lever through the gap formed between the lever and the housing accommodation wall and easily detach the housing from the housing accommodation wall upon repairing the printed circuit board module.

In addition, it is possible to minimize ultrasonic waves or vibrations generated upon bonding of the cell lead and the bus bar from being delivered to the terminal clip and thus to increase reliability of protection of the parts mounted on the printed circuit board.

In addition, it is possible to easily identify the contact state of the terminal pin and the terminal clip or the elastically formed state of the terminal clip without detachment and to minimize the parts mounted on the printed circuit board from being damaged.

### BRIEF DESCRIPTION OF THE DRAWINGS

FIG. 1 is a perspective view showing a battery pack according to an embodiment of the present invention.
FIG. 2 is a cross-sectional view showing a battery module and a connection board assembly shown in FIG. 1.
FIG. 3 is a perspective view showing the inside of the connection board assembly shown in FIGS. 1 and 2.
FIG. 4 is an exploded perspective view of the connection board assembly shown in FIG. 3.
FIG. 5 is an enlarged cross-sectional view showing a bus bar and a printed circuit board module before a shell lead and the bus bar are bonded, according to an embodiment of the present invention.
FIG. 6 is an enlarged cross-sectional view showing a bus bar and a printed circuit board module after a shell lead and the bus bar are bonded, according to an embodiment of the present invention.
FIG. 7 is an enlarged cross-sectional view showing a bus bar and a printed circuit board module before a shell lead and the bus bar are bonded, according to another embodiment of the present invention.
FIG. 8 is an enlarged cross-sectional view showing a bus bar and a printed circuit board module after a shell lead and the bus bar are bonded, according to another embodiment of the present invention.

### DETAILED DESCRIPTION OF THE EMBODIMENTS

Reference will now be made in detail to the embodiments of the present disclosure, examples of which are illustrated in the accompanying drawings.

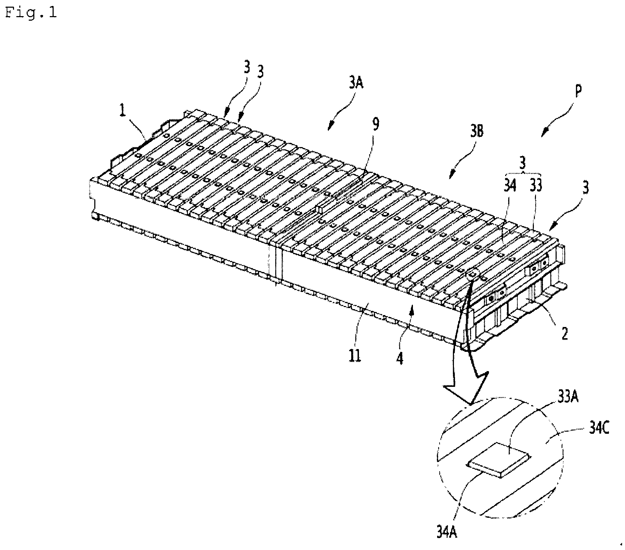

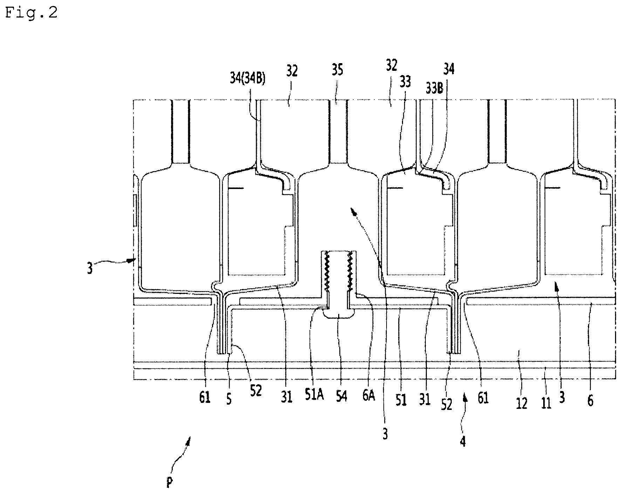

FIG. 1 is a perspective view showing a battery pack according to an embodiment of the present invention, and FIG. 2 is a cross-sectional view showing a battery module and a connection board assembly shown in FIG. 1.

The battery pack P may include a pair of end plates 1 and 2 and a plurality of battery module 3 disposed between the pair of end plates 1 and 2.

The plurality of battery modules 3 may be laminated between the pair of end plates 1 and 2. The plurality of battery modules 3 may be laminated between the pair of end plates 1 and 2 in a horizontal or vertical direction.

The plurality of battery modules 3 may be divided into a plurality of groups 3A and 3B by a separator 9. The battery pack P may include the separator 9 for dividing the group 3A and the group 3B.

As shown in FIG. 2, the battery module 3 may include a battery cell 32 including a cell lead 31. The cell lead 31 may be a positive or negative cell lead provided in the battery cell 32.

The battery module 3 may further include a cartridge 33 and a cooling cover 34 and the battery cell 32 may be disposed between the cartridge 33 and the cooling cover 34.

The battery module 3 may include at least two battery cells 32. The battery module 3 may further include a buffer member 35 disposed between the two battery cells 32. The buffer member 35 may be made of an elastic material.

If the battery module 3 includes a pair of battery cells 32, any one of the pair of battery cells 32 may be seated to contact the cartridge 33 and the other thereof may be seated to surface-contact the cooling cover 34.

A projection 33A may be formed on any one of the cartridge 33 and the cooling cover 34 and a projection insertion hole 34A, into which the projection 33A is inserted, may be formed in the other of the cartridge 33 and the cooling cover 34.

The cooling cover 34 may include a heat transfer plate 34B facing the battery cell 32 and coupling plates 34C bent from the heat transfer plate 34B and coupled to the cartridge 33.

The heat transfer plate 34B may include a flat part surface-contacting the battery cell 32.

A pair of coupling plates 34C may be provided to the heat transfer plate 34B may include.

If the projection 33A is formed on the coupling plate 34C, the projection insertion hole 34A, into which the projection 33A is inserted, may be formed in the cartridge 33. In contrast, if the projection insertion hole 34A is formed in the coupling plate 34C, the projection 33A inserted into the projection insertion hole 34A may be formed on the cartridge 33.

As shown in FIG. 2, an opening 33B, into which the cooling cover of a neighboring battery module is inserted, may be formed in the cartridge 33.

When the cartridge 33 and the cooling cover 34 are coupled, the cooling cover 34, any one of the pair of battery cells 32, the buffer member 35, the other of the pair of battery cells 32 and the cartridge 33 may be coupled to configure one battery module 3.

At least a portion of the cell lead 31 of the battery cell 32 may be located outside the cartridge 33 and the cooling cover 34 and the cell lead 31 may be connected to a connection board assembly 4.

The battery pack P may further include the connection board assembly 4 connected with the plurality of battery modules 3. The connection board assembly 4 may be connected with the cell lead 31 and the plurality of battery cells 32 may be connected in series or in parallel.

As shown in FIG. 2, the battery pack P may include a bus bar 5 bonded to the cell lead 31 and a connection board 6 on which the bus bar 5 is mounted. The battery pack P may further include an outer cover 11 covering the connection board 6 and the bus bar 5.

The bus bar 5 may include a coupling part 51 coupled to the connection board 6 and a cell lead connection part 52 formed in the coupling part 51 and bonded to the cell lead 31.

The coupling part 51 may be coupled to a hook member such as a hook or a coupling member 54 such as a screw (hereinafter, referred to as a coupling member). If the coupling part 51 is coupled to the connection board 6 using the coupling member 54, a through-hole 51A, through which the coupling member 54 passes, may be formed in the coupling part 51 and a coupling part 6A for coupling the coupling member 54 may be provided on the connection board 6. The coupling part 6A may be a coupling boss or a nut threadedly coupled with the coupling member 54.

A plurality of cell lead connection parts 52, e.g., a pair of cell lead connection parts, may be formed in the coupling part 51.

The bus bar 5 may be conductively connected to the pair of cell leads 31 and the pair of cell leads 31 may be electrically connected through the bus bar 5. The pair of cell lead connection parts 52 face each other. The pair of cell lead connection parts 52 may be bent to be perpendicular to the coupling part 51.

The bus bar 5 may conductively connect the cell leads 31 of different battery cells 32. The cell lead 31 of any one of the plurality of battery cells 32 may be connected to any one of the pair of cell lead connection parts 52. The cell lead 31 of the other of the plurality of battery cells 32 may be connected to the other of the pair of cell lead connection parts 52.

The cell lead 31 may be stably bonded to the bus bar 5, such that the cell lead 31 and the bus bar 5 transmit sufficient power, and the cell lead 31 may be bonded to the bus bar 5 through ultrasonic bonding or vibration bonding.

A plurality of bus bars 5 may be provided on the connection board 6 and the plurality of bus bars 5 may be provided to be spaced apart from each other in a direction parallel to the lamination direction of the battery modules 3.

The connection board 6 may be formed of a plate elongated in the direction parallel to the lamination direction of the plurality of battery modules 3.

A through-hole 61, through which the cell lead 31 of the battery cell 32 passes, may be formed in the connection board 6.

A space 12 for accommodating the bus bar 5 may be formed between the connection board 6 and the outer cover 11. The bus bar 5 may be accommodated in the space 12 formed between the connection board 6 and the outer cover 11 in a state of being mounted on the connection board 6.

Upon assembling the battery pack P, the bus bar 5 may be bonded to the cell lead 31 of the battery cell 32 in a state of being coupled to the connection board 6.

The outer cover 11 may be connected to the end plates 1 and 2 shown in FIG. 1, the separator 9 and the connection board 6.

The outer cover 11 may protect the bus bar 5 mounted on the connection board 6. The outer cover 11 may protect the cell lead 31 located in the space 12.

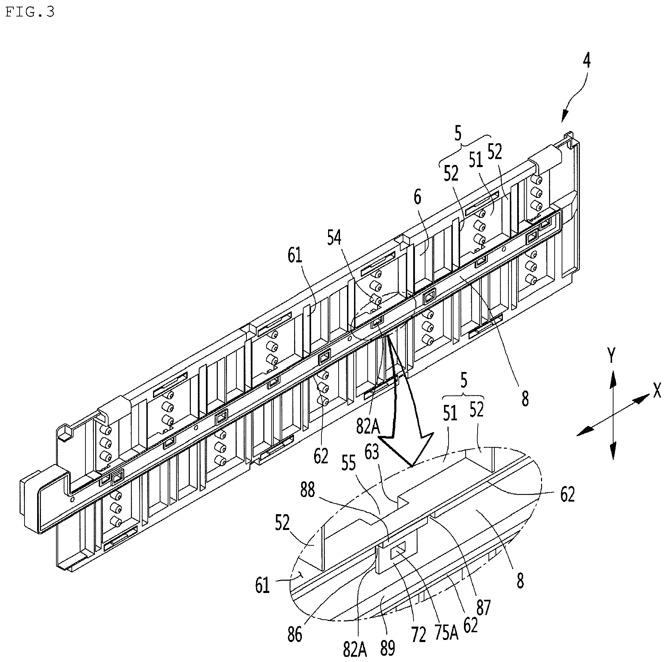

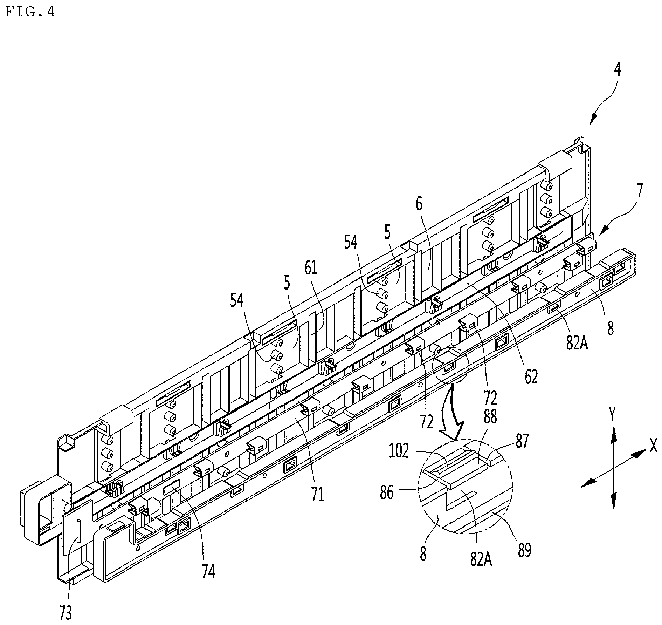

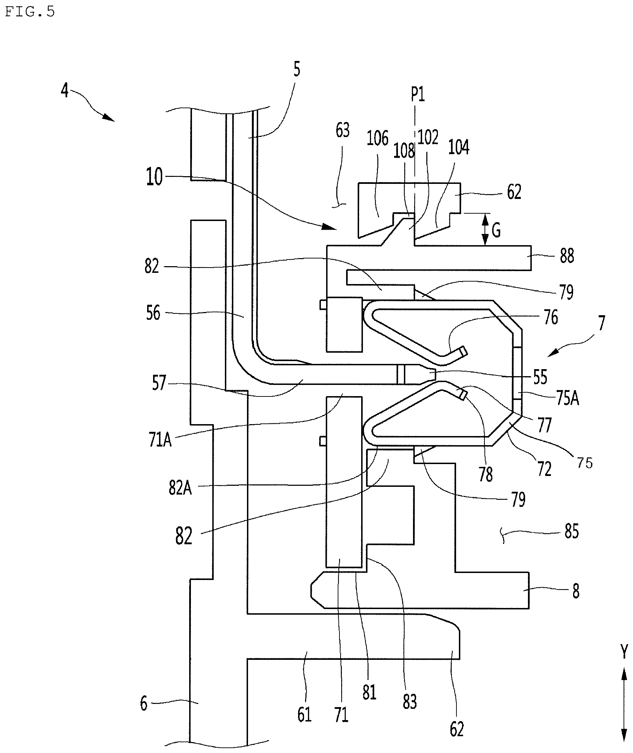

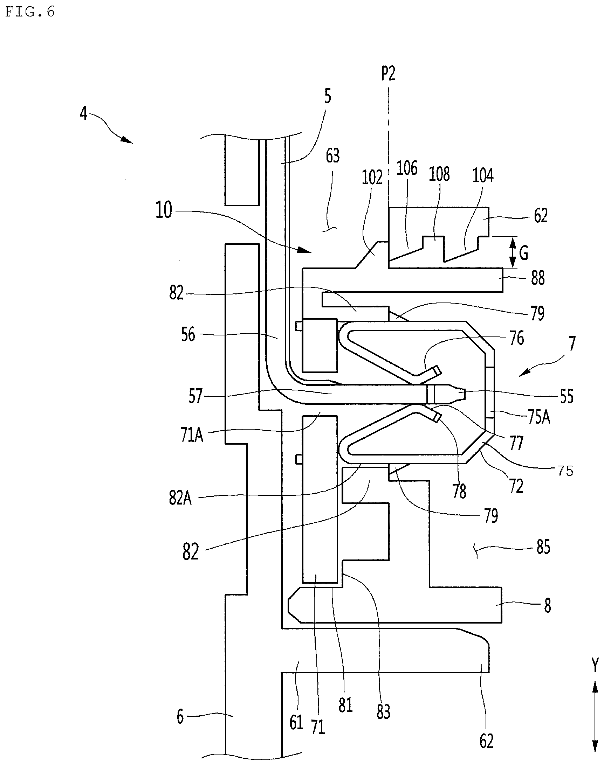

FIG. 3 is a perspective view showing the inside of the connection board assembly (4) shown in FIGS. 1 and 2, FIG. 4 is an exploded perspective view of the connection board assembly (4) shown in FIG. 3, FIG. 5 is an enlarged cross-sectional view showing a bus bar and a printed circuit board module before a shell lead and the bus bar are bonded, according to an embodiment of the present invention, FIG. 6 is an enlarged cross-sectional view showing the bus bar and the printed circuit board module after the shell lead and the bus bar are bonded, according to an embodiment of the present invention.

The battery pack P may further include a printed circuit board module 7 connected to a bus bar 5 and a housing 8 for protecting the printed circuit board module 7.

The printed circuit board module 7 and the housing 8 may configure the connection board assembly 4 shown in FIGS. 1 and 2 along with the bus bar 5 and a connection board 6.

A terminal pin 55 may be formed in the bus bar 5 as shown in FIGS. 3, 5 and 6.

The terminal pin 55 may be detachably connected to the printed circuit board module 7 and the printed circuit board module 7 may be detached from the terminal pin 55 of the bus bar 5 to be repaired or replaced.

The terminal pin 55 may protrude from the bus bar 5. The terminal pin 55 may extend from the coupling part 51.

The terminal pin 55 may include an extension 56 extending from the coupling part 51 and a bending part 57 bent from the extension 56.

The extension 56 may extend from the coupling part 51. The extension 56 may extend such that at least a portion thereof is located between the connection board 6 and the printed circuit board module 7 upon being mounted in the printed circuit board module 7.

The bending part 57 may extend to be perpendicular to the extension 56. The bending part 57 may be provided such that at least a portion thereof is inserted into the printed circuit board module 7 upon being mounted in the printed circuit board module 7 and may be in contact with the printed circuit board module 7.

A Housing accommodation wall 62 for accommodating the housing 8 may be formed on the connection board 6.

The size of the housing accommodation wall 62 may be greater than that of the housing 8. The shape of the housing accommodation wall 62 may be equal to that of the printed circuit board 71.

A terminal pin through-hole 63, through which the terminal pin 55 passes, may be formed in the housing accommodation wall 62 and the terminal pin 55 may extend into the PCH housing accommodation wall 62 through the terminal pin through-hole 63.

The printed circuit board module 7 may include the printed circuit board 71 having a circuit formed thereon. A terminal clip 72 for connecting or disconnecting the terminal pin 55 may be provided on the printed circuit board 71.

The circuit formed on the printed circuit board 71 may be a protection circuit for protecting the battery pack P.

A terminal pin through-pin 71A, through which the terminal pin 55 passes, may be formed in the printed circuit board 71. The terminal pin through-pin 71A may be formed at a position facing the inside of the terminal clip 72. The terminal pin 55 may be connected to the terminal clip 72 through the terminal pin through-hole 71A.

The terminal clip 72 may be connected to the circuit of the printed circuit board 71. Upon contact between the terminal pin 55 and the terminal clip 72, the printed circuit board 71 may be electrically connected to the bus bar through the terminal clip 72.

The terminal clip 72 may include an outer clip 75 and a pair of contacts 76 and 77 which extend into the outer clip 75 and are arranged to become elastically deformed by the terminal pin 55.

The outer clip 75 may have a space formed therein and the terminal pin 55 may enter the space of the outer clip 75 to contact the pair of contacts 76 and 77 and to elastically deform at least one of the pair of contacts 76 and 77.

One end of the pair of contacts 76 and 77 may be connected to the outer clip 75 and the other end thereof may be a free end 78. The pair of contacts 76 and 77 may face each other in the outer clip 75.

The pair of contacts 76 and 77 may be bent such that a distance therebetween decreases and then increases toward the free end 78.

The terminal pin 55 may be arranged to enter between the pair of contacts 76 and 77 to respectively contact the pair of contacts 76 and 77 and to elastically deform the pair of contacts 76 and 77 away from each other.

In the battery pack P, whether the terminal pin 55 and the contacts 76 and 77 contact each other and whether the contacts 76 and 77 are elastically deformed may be determined according to the position of the printed circuit board module 7, more particularly, the terminal clip 72.

A fuse 73 which blows upon application of a high voltage may be mounted on the printed circuit board 7. The fuse 73 may be connected to the circuit and may be blown to protect the battery cell upon applying an overvoltage to the printed circuit board 71.

A sensor 74 for measuring the current or voltage of the battery cell 32 may be mounted on the printed circuit board 7. The sensor 74 may be connected to the circuit. The sensor 74 may include a current sensor for measuring the current of the battery cell 32 or a voltage sensor for measuring the voltage of the battery cell 32. The sensor 74 may transmit the sensed value to a controller for controlling the battery pack P. The controller may control the battery pack P or a vehicle such as an electric vehicle, in which the battery pack P is mounted, according to the value sensed by the sensor 74.

A printed circuit board accommodation space 81 for accommodating the printed circuit board 71 may be formed in the housing 8.

A support wall 82 supporting the terminal clip 72 may be formed in the housing 8. At least two support walls 82 may be provided in the housing 8. Some or all of at least two support walls 82 may surface-contact the terminal clip 72 and the terminal clip 72 is stably supported and fixed by the housing 8. If two support walls 82 are formed in the housing 8, the two support walls 82 may face each other in the housing 8 and the terminal clip 72 may be supported by the two support walls 82 facing each other. Four support walls 82 may be formed in the housing 8. In this case, the four support walls 82 may support the terminal clip 72 in a state of surrounding the terminal clip 72.

A terminal clip through-hole 82A, through which the terminal clip 72 passes, may be formed in the housing 8. The terminal clip through-hole 82A may be formed by the support wall 82.

The support wall 82 may support the terminal clip 72 at a position spaced apart from the below-described lever 88. A space, in which the lever 88 may be bent, may be formed between the support wall 82 and the lever 88 and the lever 88 may be easily bent toward the support wall 82.

A engaging projection 83, in which the printed circuit board 71 accommodated in the printed circuit board accommodation space 81 is locked, may be formed in the housing 8 and the printed circuit board 71 may not be excessively inserted into the housing 8 in the printed circuit board accommodating space 81.

The printed circuit board module 7, arbitrary removal of which is restricted after being inserted into the housing 8, may be fixed to the housing 8.

A projection 79 engaged with the housing 8 may be formed on at least one of the printed circuit board 71 and the terminal clip 72. The projection 79 may be engaged with the housing 8 in a direction in which the printed circuit board module 7 is not arbitrarily removed from the housing 8.

The projection 79 may be engaged with and seated in the end of the support wall 82 when the printed circuit board 71 is completely inserted into the printed circuit board accommodation space 81.

The projection 79 may protrude from the terminal clip 72 to be engaged with the end of the support wall 82. The projection 79 may have a triangular cross-section.

That is, when the printed circuit board module 7 is inserted into the housing 8, a portion of the printed circuit board 71 is locked in the engaging projection 83 such that the printed circuit board module is not excessively inserted into the housing 8. When the printed circuit board 71 moves in the opposite direction of the engaging projection 83, the projection 79 is locked in the support wall 82 to restrict arbitrary removal of the printed circuit board module 7.

An opening 75A, through which the inside of the terminal clip 72 may be visible, may be formed in an area of the terminal clip 72, which faces the printed circuit board 71. The opening 75A may be formed in an outer clip 75 of the terminal clip 72. The opening 75A may be formed in an area, which faces the printed circuit board 71, of the outer clip 75.

A manufacturer or a service provider may check the current state of the terminal pin 55 and the current state of the pair of contacts 76 and 77 through the opening 75A. That is, the manufacturer or the service provider may check whether the terminal pin 55 contacts the pair of contacts 76 and 77 and whether the pair of contacts 76 and 77 is elastically deformed.

A housing opening 85, through which the terminal clip 72 may be viewed, may be formed in the housing 8. The housing opening 85 may be formed at the position facing the terminal clip 72 of the housing 8 and the size thereof may be greater than that of that of the terminal clip 72.

The terminal clip 72 may be viewed through the housing opening 85 and the manufacturer or the service provider may check the appearance of the terminal clip 72 without detaching the printed circuit board module 7 and the housing 8.

The manufacturer or the service provider may check the current state of the terminal pin 55 and the current state of the pair of contacts 76 and 77 through the housing opening 85 of the housing 8 and the opening 75A of the terminal clip 72.

The Housing 8 may be inserted into the housing accommodation wall 62 in a state of being coupled with the printed circuit board module 7 and locked in and fixed to the housing accommodation wall 62.

That is, upon manufacturing the battery pack P, the housing 8 may be locked in the connection board 6 in a state of being coupled with the printed circuit board module 7.

The Housing 8 may be locked in the connection board 6 by a locking part 10. The locking part 10 may lock the housing 8 at a first position PI and lock the housing 8 at a second position P2.

The locking part 10 may lock the housing 8 ralatve to the connection board 6 at the first position PI where the terminal pin 55 does not elastically deform the terminal clip 72. The locking part 10 may lock the housing 8 relative to the connection board at the second position P2 where the terminal pin 55 elastically deforms the terminal clip 72.

The first position may be a position where the terminal pin 55 does not enter between the pair of contacts 76 and 77. The first position may be a position where a portion of the terminal pin 55 enters between the pair of contacts 76 and 77 but the terminal pin 55 does not contact the pair of contacts 76 and 77. In addition, the first position may be a position where a portion of the terminal pin 55 enters between the pair of contacts 76 and 77 and the terminal pin 55 contacts at least one of the pair of contacts 76 and 77 but does not elastically deform the pair of contacts 76 and 77.

In contrast, the second position may be a position where the terminal pin 55 contacts the pair of contacts 76 and 77 and elastically deforms the pair of contacts 76 and 77.

The manufacturer may bond the cell lead 31 and the bus bar 5 shown in FIG. 2 using the ultrasonic bonding method or the vibration bonding method in a state in which the terminal pin 55 elastically deforms the pair of contacts 76 and 77. However, ultrasonic waves or vibrations generated when bonding the cell lead 31 and the bus bar 5 may be sequentially delivered through the terminal pin 55, the terminal clip 72 and the printed circuit board 71. Ultrasonic waves or vibrations may be delivered to the fuse 73 or the sensor 74 mounted in the printed circuit board 71, damaging the fuse 73 or the sensor 74.

The battery pack P may be assembled such that ultrasonic waves or vibrations generated upon bonding the cell lead 31 and the bus bar 5 using the ultrasonic bonding method or the vibration bonding method are not delivered to the fuse 73 or the sensor 74.

The locking part 10 may lock the housing 8 at the first position before bonding the cell lead 31 and the bus bar 5 and the manufacturer may bond the cell lead 31 and the bus bar 5 using the ultrasonic bonding method or the vibration bonding method in a state in which the housing 8 is locked at the first position. The manufacturer may lock the housing 8 at the second position after the process of bonding the cell lead 31 and the bus bar 5. In this case, the fuse 73 or the sensor 74 mounted in the printed circuit board 71 may be prevented from being damaged.

The locking part 10 may lock the housing 8 in two stages at different positions PI and P2. By such a 2-stage locking structure, the manufacturer may conveniently assemble the battery pack P while minimizing damage to the fuse 73 or the sensor 74.

The locking part 10 may include a protrusion 102 formed on any one of the housing 8 and the connection board 6. A first engaging projection 104 is formed in the other of the housing 8 and the connection board 6 and the engaging projection 104 is designed to lock the protrusion in a first stage. And a second engaging projection 106 is formed in the other of the housing 8 and the connection board 6 to be spaced apart from the first engaging projection 104 and the second engaging projection 106 is designed to lock the protrusion 102 in a second stage. A gap 108, into which the protrusion 102 extends, may be formed between the first engaging projection 104 and the second engaging projection 106.

The protrusion 102 may be formed on any one of the housing 8 and the housing accommodation wall 62 and the first engaging projection 104 and the second engaging projection 106 may be formed on the other of the housing 8 and the housing accommodation wall 62.

If the protrusion 102 protrudes from the housing 8, the first engaging projection 104 and the second engaging projection 106 may be formed on the connection board 6, more particularly, the housing accommodation wall 62. The protrusion 102 protruding from the housing 8 may be extended into the gap 108 formed between the first engaging projection 104 and the second engaging projection 106 and locked between the first engaging projection 104 and the second engaging projection 106 in the first stage.

Hereinafter, the case in which the protrusion 102 protrudes from the housing 8 and the first engaging projection 104 and the second engaging projection 106 are formed on the housing accommodation wall 62 will be described in greater detail.

The protrusion 102 may be formed on the outer surface of the housing 8.

A pair of slits 86 and 87 may be formed in the housing 8 by the side of an area, which faces the terminal clip 72, and a lever 88 may be formed between the pair of slits 86 and 87. The lever 88 may have one end connected to the housing 8 and the other end which may be a free end, and may be elastically bent by the pair of slits 86 and 87.

As shown in FIGS. 5 and 6, the protrusion 102 may be formed on the lever 88. When the manufacturer pulls the lever 88 to close to the opposite side 89 of the lever 88, the lever 88 may be elastically bent to be separated from the first engaging projection 104 and the second engaging projection 106, and the protrusion 102 formed on the lever 88 may be unlocked from the first engaging projection 104 or the second engaging projection 106.

A gap G may be formed between the lever 88 and the inner surface of the housing accommodation wall 62. The manufacturer or the service provider may insert his/her finger or a tool through the gap G to elastically bend the lever 88 and easily detach the housing 8 from the housing accommodation wall 62.

The first engaging projection 104 and the second engaging projection 106 may protrude from the inner surface of the housing accommodation wall 62. The first engaging projection 104 and the second engaging projection 106 may be formed to face the lever 88 and protrude toward the lever 88.

The protrusion 102 may be extended into the gap 108 between the first engaging projection 104 and the second engaging projection 106 over the first engaging projection 104 and may be locked by the first engaging projection 104 and the second engaging projection 106 as shown in FIG. 5. At this time, the housing 8 may be at the first position.

The protrusion 102 may move from the gap 108 between the first engaging projection 104 and the second engaging projection 106 over the second engaging projection 106 and may be locked in the second engaging projection 106 as shown in FIG. 6. At this time, the housing 8 may be at the second position.

The battery pack P may have a structure in which delivery of ultrasonic waves or vibrations generated upon bonding the cell lead 31 and the bus bar 5 to the pair of contacts 76 and 77 is minimized.

The pair of contacts 76 and 77 may face each other in a direction orthogonal to the longitudinal direction of the printed circuit board 71. If the printed circuit board 71 is elongated in the left-and-right direction, the pair of contacts 76 and 77 may face each other in the up-and-down direction or the front-and-rear direction.

The pair of contacts 76 and 77 may face each other in a direction (Y direction) orthogonal to the contact direction (X direction) of the cell lead 31 and the bus bar 5.

If the pair of contacts 76 and 77 face each other in a direction parallel to the contact direction (X direction) of the cell lead 31 and the bus bar 5, the vibration direction of the cell lead 31 and the bus bar 5 may be equal to the contact direction (X direction) of the cell lead 31 and the bus bar 5 and the terminal pin 55 may vibrate while alternately elastically deforming the pair of contacts 76 and 77 during bonding of the cell lead 31 and the bus bar 5.

Ultrasonic waves or vibrations delivered to the terminal pin 55 may be alternately delivered through the pair of the contacts 76 and 77 and vibrations delivered to the pair of contacts 76 and 77 may be delivered to the fuse 73 or the sensor 74 through the printed circuit board 71.

That is, if the cell lead 31 and the bus bar 5 contact each other in the left-and-right direction and the pair of contacts 76 and 77 are spaced apart from each other in the left-and-right direction, ultrasonic waves or vibrations generated upon bonding the cell lead 31 and the bus bar 5 may be delivered through the terminal pin 5 in the left-and-right direction, the terminal pin 5 vibrating in the left-and-right direction may alternately elastically deform the pair of contacts 76 and 77 in the left-and-right direction, and vibrations delivered to the fuse 73 or the sensor 74 of the printed circuit board 71 may be large.

In contrast, if the pair of contacts 76 and 77 faces each other in the direction (Y direction) orthogonal to the contact direction (X direction) of the cell lead 31 and the bus bar 5, the terminal pin 5 may vibrate between the pair of contacts 76 and 77 without contacting the pair of contacts 76 and 77 or may slidably vibrate in a state of contacting at least one of the pair of contacts 76 and 77.

In greater detail, the cell lead 31 and the bus bar 5 may contact each other in the left-and-right direction in a state of facing each other in the left-and-right direction and ultrasonic waves or vibrations may be generated in the left-and-right direction upon bonding the cell lead 31 and the bus bar 5. In this case, the pair of contacts 76 and 77 may face each other in an up-and-down direction orthogonal to the left-and-right direction. The terminal pin 55 may vibrate in the left-and-right direction in a state in which a portion of the terminal pin 55 enters between the pair of contacts 76 and 77 upon bonding the cell lead 31 and the bus bar 5 and the terminal pin 55 vibrating between the pair of contacts 76 and 77 may slidably vibrate in a state of contacting at least one of the pair of contacts 76 and 77 or vibrate without contacting the pair of contacts 76 and 77. In this case, it is possible to minimize ultrasonic waves or vibrations delivered to the pair of contacts 76 and 77.

In contrast, the cell lead 31 and the bus bar 5 may contact each other in the up-and-down direction in a state of facing each other in the up-and-down direction and ultrasonic waves or vibrations may be generated in the up-and-down direction upon bonding the cell lead 31 and the bus bar 5. In this case, the pair of contacts 76 and 77 may face each other in the left-and-right direction orthogonal to the up-and-down direction. The terminal pin 55 may vibrate in the up-and-down direction in a state in which a portion of the terminal pin 55 is inserted between the pair of contacts 76 and 77 upon bonding the cell lead 31 and the bus bar 5 and the terminal pin 55 vibrating between the pair of contacts 76 and 77 may slidably vibrate in a state of contacting at least one of the pair of contacts 76 and 77 or vibrate without contacting the pair of contacts 76 and 77. In this case, it is possible to minimize ultrasonic waves or vibrations delivered to the pair of contacts 76 and 77.

Hereinafter, operation of the present invention will be described.

In the battery pack P of this embodiment, the cell lead 31 and the bus bar 5 may be bonded in a state of temporarily assembling the housing 8 on the connection board 6 and the housing 8 may be completely assembled on the connection board 6 after the process of bonding the cell lead 31 and the bus bar 5 is completed.

Here, the position where the housing 8 is temporarily assembled may be a position where the housing 8 is inserted into the housing accommodation wall 62 to a first depth, as shown in FIG. 5. At this time, the terminal pin 55 may not contact at least one of the pair of contacts 76 and 77 or may elastically deform the pair of contacts 76 and 77.

The position where the housing 8 is completely assembled may be a position where the housing 8 is inserted into the housing accommodation wall 62 at a second depth (second depth > first depth), as shown in FIG. 6. At this time, the terminal pin 55 may elastically deform the pair of contacts 76 and 77.

The manufacturer may push the housing 8 into the housing accommodation wall 62 by a predetermined depth. At this time, the protrusion 102 climbs over the first engaging projection 104.

At this time, the protrusion 102 may be extended into the gap 108 formed between the first engaging projection 104 and the second engaging projection 106 and the protrusion 102 may be locked between the first engaging projection 104 and the second engaging projection 106. The Housing 8 may be positioned at the first position PI where the terminal pin 55 does not contact at least one of the pair of contacts 76 and 77 or does not elastically deform the pair of contacts 76 and 77, and temporary assembly of the housing 8 may be completed.

The manufacturer may bring the cell lead 31 of the battery cell 32 into contact with the bus bar 5 and bond the cell lead 31 and the bus bar 5 using the ultrasonic bonding method or the vibration bonding method, in a state of completing temporary assembly of the housing 8.

Upon bonding the cell lead 31 and the bus bar 5 using the ultrasonic bonding method or the vibration bonding method, it is possible to prevent vibrations from being delivered to the pair of contacts 76 and 77 or to minimize delivered vibrations and to minimize damage to the parts mounted in the printed circuit board 71, e.g., the fuse 73 or the sensor 74.

The manufacturer may more deeply push the housing 8 into the housing accommodation wall 62 after bonding of the cell lead 31 and the bus bar 5 is completed.

The protrusion 102 locked between the engaging projection 104 and the second engaging projection 106 may climb over the second engaging projection 106 to be locked by the second engaging projection 106. At this time, the housing 8 may be located at the second position P2 where the terminal pin 55 elastically deforms the pair of contacts 76 and 77 and assembly of the housing 8 may be completed.

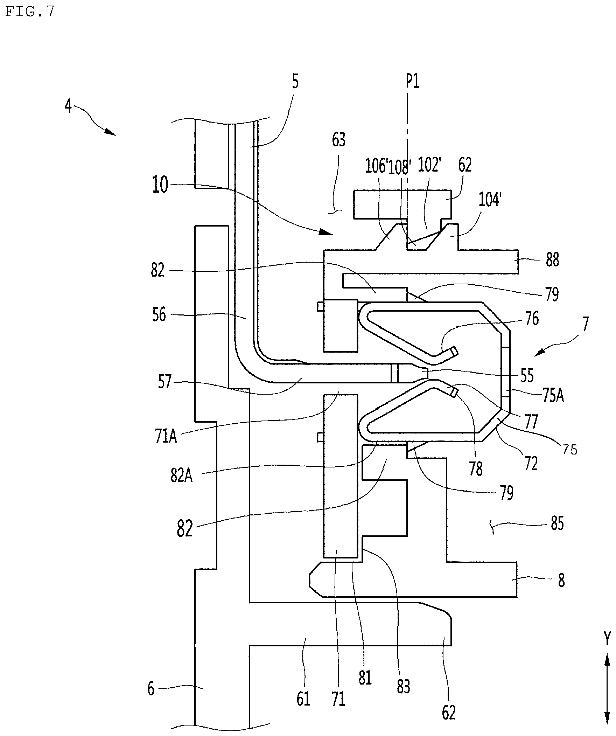

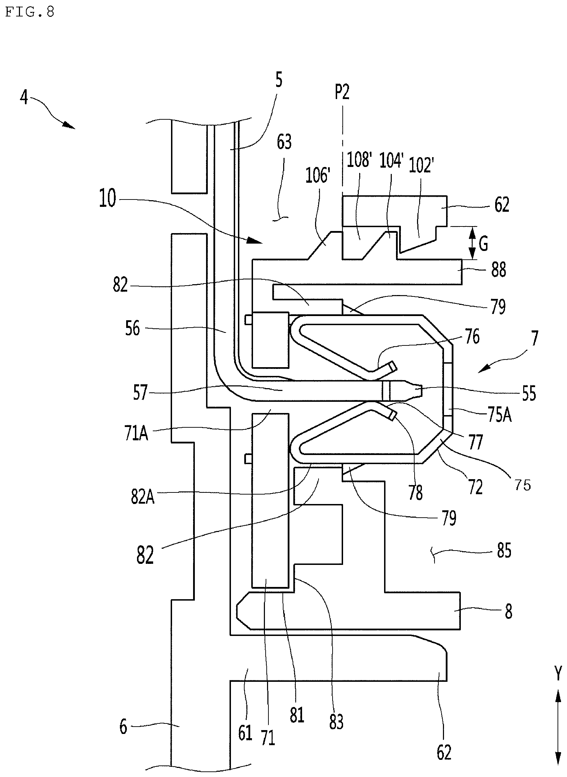

FIG. 7 is an enlarged cross-sectional view showing a bus bar and a printed circuit board module before a shell lead and the bus bar are bonded, according to another embodiment of the present invention, and FIG. 8 is an enlarged cross-sectional view showing the bus bar and the printed circuit board module after the shell lead and the bus bar are bonded, according to another embodiment of the present invention.

This embodiment is equal to the above-described embodiment of the present invention except for the positions of the protrusion 102', the first engaging projection 104' and the second engaging projection 106' and thus the same parts as the above-described embodiments of the present invention are denoted by the same reference numerals and a detailed description thereof will be omitted.

The protrusion 102' may protrude from the connection board 6, more particularly, the housing accommodation wall 62. The protrusion 102' may protrude from the inner surface of the housing accommodation wall 62.

The first engaging projection 104' and the second engaging projection 106' may protrude from the housing 8. The first engaging projection 104' and the second engaging projection 106' may protrude from the lever of the housing 8.

The manufacturer may push the housing 8 into the housing accommodation wall 62 by a predetermined depth. At this time, the second engaging projection 106' may climb over the protrusion 102'.

After the second engaging projection 106' climbs over the protrusion 102', the lever 88 may be elastically restored, the protrusion 102' may extends into the gap 108' formed between the first engaging projection 104' and the second engaging projection 106', and the first engaging projection 104' and the second engaging projection 106' may be positioned within the protrusion 102' interposed therebetween. At this time, the first engaging projection 104' and the second engaging projection 106' may be locked by the protrusion 102' such that the housing 8 is locked at the first position PI.

After completing the process of bonding the cell lead 31 and the bus bar 5, the manufacturer may more deeply push the housing 8 into the housing accommodation wall 62. At this time, the first engaging projection 104' may climb over the protrusion 102' and the first engaging projection 104' may be locked by the protrusion 102'. At this time, the housing 8 may be locked at the second position P2.

Although embodiments have been described with reference to a number of illustrative embodiments thereof, it will be understood by those skilled in the art that various changes in form and details may be made therein without departing from the scope of the invention as defined by the appended claims.

Therefore, the preferred embodiments should be considered in a descriptive sense only and not for purposes of limitation, and also the technical scope of the invention is not limited to the embodiments.

Furthermore, the present invention is defined not by the detailed description of the invention but by the appended claims.

## Claims

1. A battery pack comprising:
a battery cell (32) including a cell lead (31);
a bus bar (5) bonded to the cell lead (31) and having a terminal pin (55) formed therein;
a connection board (6) to which the bus bar (5) is mounted;
a printed circuit board (71) having a terminal clip (72) mounted thereon, the terminal pin (55) being arranged to selectively connect to and disconnect from the terminal clip (72);
a housing (8) having a printed circuit board accommodation space (81) for accommodating the printed circuit board (71); and
a locking part (10) for locking the housing (8) relative to the connection board (6) at a first position where the terminal pin (55) does not elastically deform the terminal clip (72) and locking the housing (8) relative to the connection board (6) at a second position where the terminal pin (55) elastically deforms the terminal clip (72).

2. The battery pack according to claim 1, wherein the locking part (10) includes:
a protrusion (102) formed on any one of the housing (8) and the connection board (6);
a first engaging projection (104) formed on the other of the housing (8) and the connection board (6) and designed to lock the protrusion (102) in a first stage; and
a second engaging projection (106) formed on the other of the housing (8) and the connection board (6) to be spaced apart from the first engaging projection (104) and designed to lock the protrusion (102) in a second stage.

3. The battery pack according to claim 2, wherein a gap (108), into which the protrusion (102) extends, is formed between the first engaging projection (104) and the second engaging projection (106).

4. The battery pack according to claim 2 or 3, wherein:
a housing accommodation wall (62) for accommodating the housing (8) is formed on the connection board (6), and
a size of the housing accommodation wall (62) is greater than that of the housing (8).

5. The battery pack according to claim 4, wherein:
the protrusion (102) protrudes from an outer surface of the housing (8), and
the first engaging projection (104) and the second engaging projection (106) protrude from an inner surface of the housing accommodation wall (62).

6. The battery pack according to claim 5, wherein:
a pair of slits (86, 87) is formed in the housing (8) by the side of an area facing the terminal clip (72), and
a lever (88) is formed between the pair of slits (86, 87).

7. The battery pack according to claim 6, wherein the protrusion (102) is formed on the lever (88).

8. The battery pack according to claim 6 or 7, wherein a gap (G) is formed between the lever (88) and an inner surface of the housing accommodation wall (62).

9. The battery pack according to any one preceding claim, wherein the terminal clip (72) includes:
an outer clip (75); and
a pair of contacts (76, 77) extending from the outer clip (75) to the inside of the outer clip (75) and arranged to become elastically deformed by the terminal pin (55).

10. The battery pack according to claim 9, wherein one end of the pair of contacts (76, 77) is connected to the outer clip (75) and the other end thereof is a free end (78).

11. The battery pack according to claim 9 or 10, wherein the terminal pin (55) is arranged to enter between the pair of contacts (76, 77) to elastically deform the pair of contacts (76, 77) away from each other.

12. The battery pack according to any one of claims 9 to 11, wherein the locking part (10) is designed to:
lock the housing (8) relative to the connection board (6) in a first stage at a first position where the terminal pin (55) does not elastically deform the pair of contacts (76, 77), and
lock the housing (8) relative to the connection board (6) in a second stage at a second position where the terminal pin (55) elastically deforms the pair of contacts (76, 66).

13. The battery pack according to any one of claims 9 to 12, wherein the pair of contacts (76, 77) face each other in a direction orthogonal to a contact direction of the cell lead (31) and the bus bar (5).

14. The battery pack according to any one of claims 11 to 13, wherein a support wall (82) supporting the terminal clip (72) is formed in the housing (8).

15. The battery pack according to any one preceding claim, wherein an opening (75A), through which the inside of the terminal clip (72) is visible, is formed in an area of the terminal clip (72) which faces the printed circuit board (71),.

## Patentansprüche

1. Batteriepack umfassend:
eine Batteriezelle (32), beinhaltend einen Zelldraht (31);
eine mit dem Zelldraht (31) verbundene Sammelschiene (5), in welcher ein Anschlussstift (55) gebildet ist;
eine Anschlussplatte (6), an welcher die Sammelschiene (5) befestigt ist;
eine Leiterplatte (71), an welcher eine Anschlussklemme (72) angebracht ist, wobei der Anschlussstift (55) dazu ausgebildet ist, um wahlweise mit der Anschlussklemme (72) verbunden oder von dieser getrennt zu werden;
ein Gehäuse (8), welches einen Leiterplatten-Aufnahmeraum (81) aufweist, um die Leiterplatte (71) aufzunehmen; und
ein Rastelement (10), um das Gehäuse (8) in einer ersten Position relativ zu der Anschlussplatte (6) zu verrasten, in welcher der Anschlussstift (55) die Anschlussklemme (72) nicht elastisch verformt, und um das Gehäuse (8) in einer zweiten Position relativ zu der Anschlussplatte (6) zu verrasten, in welcher der Anschlussstift (55) die Anschlussklemme (72) elastisch verformt.

2. Batteriepack nach Anspruch 1, wobei das Rastelement (10) beinhaltet:
ein an einem Element aus dem Gehäuse (8) und der Anschlussplatte (6) geformter Überstand (102);
eine an dem verbleibenden Element aus dem Gehäuse (8) und der Anschlussplatte (6) gebildete erste Einrastnase (104), welche dazu ausgebildet ist, den Überstand (102) in einer ersten Stellung zu verrasten; und
eine an dem verbleibenden Element aus dem Gehäuse (8) und der Anschlussplatte (6) gebildete und von der ersten Einrastnase (104) beabstandete zweite Einrastnase (106), welche dazu ausgebildet ist, den Überstand (102) in einer zweiten Stellung zu verrasten.

3. Batteriepack nach Anspruch 2, wobei eine Aussparung (108) zwischen der ersten Einrastnase (104) und der zweiten Einrastnase (106) geformt ist, in welche sich der Überstand (102) erstreckt.

4. Batteriepack nach einem der Ansprüche 2 oder 3, wobei:
eine Gehäuseaufnahmewand (62) um das Gehäuse (8) aufzunehmen auf der Anschlussplatte (6) geformt ist, und
eine Abmessung der Gehäuseaufnahmewand (62) größer als eine Abmessung des Gehäuses (8) ist.

5. Batteriepack nach Anspruch 4, wobei:
der Überstand (102) von einer Außenfläche des Gehäuses (8) hervorsteht, und
die erste Einrastnase (104) und die zweite Einrastnase (106) von einer Innenfläche der Gehäuseaufnahmewand (62) hervorstehen.

6. Batteriepack nach Anspruch 5, wobei:
in einer der Anschlussklemme (72) zugewandten Seite des Gehäuses (8) ein Paar Schlitze (86, 87) geformt ist, und
ein Hebel (88) zwischen dem Paar Schlitze (86, 87) geformt ist.

7. Batteriepack nach Anspruch 6, wobei der Überstand (102) auf dem Hebel (88) geformt ist.

8. Batteriepack nach Anspruch 6 oder 7, wobei eine Aussparung (G) zwischen dem Hebel (88) und einer Innenfläche der Gehäuseaufnahmewand (62) geformt ist.

9. Batteriepack nach einem der vorherigen Ansprüche, wobei die Anschlussklemme (72) beinhaltet:
eine äußere Klemme (75); und
ein Paar Kontakte (76, 77), welche sich von der äußeren Klemme (75) in Richtung auf eine Innenseite der äußeren Klemme (75) erstrecken und angeordnet sind, um durch den Anschlussstift (55) elastisch verformt zu werden.

10. Batteriepack nach Anspruch 9, wobei ein Ende des Kontaktpaares (76, 77) mit der äußeren Klemme (75) verbunden ist und dessen anderes Ende ein freies Ende (78) ist.

11. Batteriepack nach Anspruch 9 oder 10, wobei die Anschlussklemme (72) angeordnet ist, um zwischen dem Kontaktpaar (76, 77) durchgeführt zu werden, um die Kontakte (76, 77) mittels elastischer Verformung voneinander zu entfernen.

12. Batteriepack nach einem der Ansprüche 9 bis 11, wobei das Rastelement (10) dazu ausgebildet ist, um:
in einer ersten Stellung das Gehäuse (8) an einer ersten Position relativ zu der Anschlussplatte (6) zu verrasten, an welcher der Anschlussstift (55) das Kontaktpaar (76, 77) nicht elastisch verformt, und
in einer zweiten Stellung das Gehäuse (8) an einer zweiten Position relativ zu der Anschlussplatte (6) zu verrasten, an welcher der Anschlussstift (55) das Kontaktpaar (76, 77) elastisch verformt.

13. Batteriepack nach einem der Ansprüche 9 bis 12, wobei die Kontakte (76, 77) in einer Richtung einander zugewandt sind, welche orthogonal zu einer Verbindungsrichtung des Zelldrahts (31) und der Sammelschiene (5) ist.

14. Batteriepack nach einem der Ansprüche 1 bis 13, wobei in dem Gehäuse (8) eine Verstärkungswand (82) geformt ist, welche die Anschlussklemme (72) verstärkt.

15. Batteriepack nach einem der vorherigen Ansprüche, wobei eine Öffnung (75A) in einem der Leiterplatte (71) zugewandten Bereich der Anschlussklemme (72) geformt ist, durch welche die Innenseite der Anschlussklemme (72) sichtbar ist.

## Revendications

1. Bloc-batterie comprenant :
une cellule de batterie (32) comprenant un fil de cellule (31) ;
une barre omnibus (5) liée au fil de cellule (31) et dans laquelle est formée une broche de borne (55) ;
une carte de connexion (6) sur laquelle est montée la barre omnibus (5) ;
une carte de circuit imprimé (71) comportant un clip de borne (72) monté sur celle-ci, la broche de borne (55) étant agencée pour se connecter sélectivement au clip de borne (72) et se déconnecter de celui-ci ;
un boîtier (8) comportant un espace de logement de carte de circuit imprimé (81) pour recevoir la carte de circuit imprimé (71) ; et
une pièce de verrouillage (10) pour verrouiller le boîtier (8) par rapport à la carte de connexion (6) au niveau d'une première position où la broche de borne (55) ne déforme pas élastiquement le clip de borne (72) et verrouille le boîtier (8) par rapport à la carte de connexion (6) au niveau d'une seconde position où la broche de borne (55) déforme élastiquement le clip de borne (72).

2. Bloc-batterie selon la revendication 1, dans lequel la partie de verrouillage (10) comprend :
une saillie (102) formée sur l'un quelconque du boîtier (8) et de la carte de connexion (6) ;
une première saillie de mise en prise (104) formée sur l'autre élément parmi le boîtier (8) et la carte de connexion (6) et conçue pour verrouiller la saillie (102) dans un premier stade ; et
une seconde saillie de mise en prise (106) formée sur l'autre élément parmi le boîtier (8) et la carte de connexion (6) à espacer de la première saillie de mise en prise (104) et conçue pour verrouiller la saillie (102) dans un deuxième stade.

3. Bloc-batterie selon la revendication 2, dans lequel un espace (108), dans lequel s'étend la saillie (102) est formé entre la première saillie de mise en prise (104) et la seconde saillie de mise en prise (106).

4. Bloc-batterie selon la revendication 2 ou 3, dans lequel :
une paroi de logement de boîtier (62) destinée à recevoir le boîtier (8) est formée sur la carte de connexion (6), et
une taille de la paroi de logement de boîtier (62) est supérieure à celle du boîtier (8).

5. Bloc-batterie selon la revendication 4, dans lequel :
la saillie (102) fait saillie depuis une surface extérieure du boîtier (8), et
la première saillie de mise en prise (104) et la seconde saillie de mise en prise (106) font saillie depuis une surface intérieure de la paroi de logement de boîtier (62).

6. Bloc-batterie selon la revendication 5, dans lequel :
une paire de fentes (86, 87) est formée dans le boîtier (8) sur le côté d'une zone faisant face au clip terminal (72), et
un levier (88) est formé entre la paire de fentes (86, 87).

7. Bloc-batterie selon la revendication 6, dans lequel la saillie (102) est formée sur le levier (88).

8. Bloc-batterie selon la revendication 6 ou 7, dans lequel un espace (G) est formé entre le levier (88) et une surface intérieure de la paroi de logement de boîtier (62).

9. Bloc-batterie selon l'une quelconque des revendications précédentes, dans lequel le clip de borne (72) comprend :
un clip extérieur (75) ; et
une paire de contacts (76, 77) s'étendant du clip extérieur (75) jusqu'à l'intérieur du clip extérieur (75) et agencés pour devenir élastiquement déformés par la broche de borne (55).

10. Bloc-batterie selon la revendication 9, dans lequel une extrémité de la paire de contacts (76, 77) est reliée au clip extérieur (75) et son autre extrémité est une extrémité libre (78).

11. Bloc-batterie selon la revendication 9 ou 10, dans lequel la broche de borne (55) est agencée pour pénétrer entre la paire de contacts (76, 77) afin de déformer élastiquement la paire de contacts (76, 77) éloignés l'un de l'autre.

12. Bloc-batterie selon l'une quelconque des revendications 9 à 11, dans lequel la partie de verrouillage (10) est conçue pour :
verrouiller le boîtier (8) par rapport à la carte de connexion (6) dans un premier stade au niveau d'une première position où la broche de borne (55) ne déforme pas élastiquement la paire de contacts (76, 77), et
verrouiller le boîtier (8) par rapport à la carte de connexion (6) dans un deuxième stade au niveau d'une seconde position où la broche de borne (55) déforme élastiquement la paire de contacts (76, 66).

13. Bloc-batterie selon l'une quelconque des revendications 9 à 12, dans lequel la paire de contacts (76, 77) se font face dans une direction orthogonale à une direction de contact du fil de cellule (31) et de la barre omnibus (5).

14. Bloc-batterie selon l'une quelconque des revendications 11 à 13, dans lequel une paroi de support (82) supportant le clip terminal (72) est formée dans le boîtier (8).

15. Bloc-batterie selon l'une quelconque des revendications précédentes, dans lequel une ouverture (75A), à travers laquelle est visible l'intérieur du clip de borne (72), est ménagée dans une zone du clip de borne (72) qui fait face à la carte de circuit imprimé (71).
